# EUROPÄISCHE PATENTSCHRIFT

(11) **EP 0 582 105 B1**
(45) Veröffentlichungstag und Bekanntmachung des Hinweises auf die Patenterteilung: **10.04.1996**
(21) Anmeldenummer: 93111083.7
(22) Anmeldetag: 10.07.1993
(51) Int. Cl.: F16H 61/18

(54) **Neutralsperre für einen Getriebeschalthebel**
Neutral lock for a gear shift lever
Verrouillage de point mort pour un levier de changement de vitesses

(30) Priorität: 05.08.1992 US 925542
(43) Veröffentlichungstag der Anmeldung: 09.02.1994
(73) Patentinhaber: DEERE & COMPANY, Moline, Illinois 61265 (US)
(72) Erfinder: Haight, Robert Eugene, Waterloo, Iowa 50702 (US)
(74) Vertreter: Feldmann, Bernhard

(56) Entgegenhaltungen:
- DE-A- 4 127 537
- GB-A- 919 570
- US-A- 3 292 450
- US-A- 4 633 728
- US-A- 4 671 378
- US-A- 4 977 789

## Beschreibung

Die Erfindung betrifft eine Schalthebelanordnung mit einer Platte, die wenigstens einen Richtungsgangschlitz enthält, von dem ein Neutralschlitz quer abzweigt. Der bewegbare Schaft eines Schalthebels wird von den Schlitzen aufgenommen und geführt. Es ist ein Verriegelungsmechanismus vorgesehen, durch den sich der Schaft lösbar in dem Neutralschlitz festhalten läßt.

Bei einem elektrohydraulisch steuerbaren Lastschaltgetriebe oder einem hydromechanisch gesteuerten Getriebe läßt sich der Schalthebel ohne Mühe zwischen den Gängen oder von Neutral in den Vorwärts- oder Rückwärtsgang bewegen. Läßt die Bedienungsperson den Schalthebel bei laufendem Motor in der Neutralstellung, kann eine unbeabsichtigte Bewegung des Schalthebels ein zufälliges Einrücken des Getriebes in einen Gang zur Folge haben. Es ist ein Mechanismus wünschenswert, der solch ein zufälliges Einrücken verhindert. Ein bekanntes Lastschaltgetriebe enthält einen durch Finger betätigbaren Ring, durch den der Schalthebel aus der Neutralstellung lösbar ist. Kraftfahrzeuge haben daumenbetätigbare Knöpfe auf dem Schalthebel, um den Schalthebel beispielsweise vor einer unbeabsichtigten Bewegung von der Parkposition in den Rückwärtsgang zu schützen. Derartige Ringe und Knöpfe lassen sich jedoch schwierig auslösen, wenn die Bedienungsperson Handschuhe trägt.

Die US-A-4 282 769 zeigt eine Neutralsperre für eine Getriebeumschalteinrichtung. Bei diesem System muß jedoch ein Verriegelungsarm mit einer T-förmigen Handhabe manuell in eine bzw. aus einer Verriegelungslage gedreht werden. Eine andere Neutralsperre für eine Getriebeschalteinrichtung geht aus der US-A-4 163 398 hervor. In diesem System müssen ein Paar von Verriegelungshebeln mittels eines Betätigungshebels manuell in eine bzw. aus einer Verriegelungsstellung verdreht werden. Es ist wünschenswert, einen Neutralsperrmechanismus zu haben, der automatisch verriegelt und der durch Betätigung des Schaltsteuerhebels leicht entriegelt werden kann.

Eine weitere Neutralsperre für eine Getriebeschalteinrichtung zeigt die US-A-4 671 378. Diese Einrichtung erfordert jedoch einen sperrigen Mechanismus mit einer Welle und einem Tragarm. Der Tragarm weist einen Schlitz mit einem Ausschnitt auf, welcher den Getriebeschalthebel aufnimmt. Es wäre jedoch wünschenswert, einen Neutralsperrmechanismus zu haben, der einfach und kompakt aufgebaut ist.

Die der Erfindung zugrunde liegende Aufgabe wird darin gesehen, eine Schalthebelanordnung der eingangs genannten, bekannten Art anzugeben, deren Neutralverriegelungsmechanismus eine unbeabsichtigte Bewegung des Schalthebels aus seiner Neutralstellung in eine Vorwärts- oder Rückwärtsstellung verhindert, die sich leicht auch durch eine Bedienungsperson, die Handschuhe trägt, betätigen läßt und die einen einfachen und kompakten Aufbau aufweist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Schalthebelanordnung enthält eine Platte, die mehrere sich schneidende Schlitze, einschließlich eines sich in Fahrtrichtung erstreckenden Richtungsgangschlitzes und eines sich quer dazu erstreckenden Neutralschlitzes, aufweist. Auf der einen Seite des Neutralschlitzes ist eine Ausnehmung eingelassen. Ein Schalthebel wird mit seinem beweglichen Schaft von den Schlitzen aufgenommen und durch diese geführt. Mit dem Schaft läßt sich ein Verriegelungsmechanismus in Eingriff bringen, durch den der Schaft lösbar in der Ausnehmung festgehalten wird, so daß eine unbeabsichtigte Bewegung des Schafts aus dem Neutralschlitz in den Richtungsgangschlitz verhindert wird. Eine Schalthebelfeder drückt den Schaft von dem Richtungsgangschlitz weg. Eine Verriegelungsfeder drückt ein Verriegelungsteil in Richtung der Ausnehmung, so daß der Schaft, das Verriegelungsteil, die Verriegelungsfeder und die Ausnehmung miteinander zusammenwirken, um eine unbeabsichtigte Bewegung des Schafts in eine Richtung zu verhindern, die im wesentlichen parallel zu dem Neutralschlitz liegt und aus der Ausnehmung und dem Neutralschlitz herausführt. Das Verriegelungsteil läßt sich durch Betätigung des Schalthebels aus der Ausnehmung heraus schwenken, indem der Schalthebel von der Ausnehmung weg und in eine Richtung im wesentlichen quer zu dem Neutralschlitz bewegt wird. Hierdurch wird eine Bewegung des Schafts in eine Richtung ermöglicht, die im wesentlichen parallel zu dem Neutralschlitz verläuft und aus der Ausnehmung sowie dem Neutralschlitz herausführt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: den Aufriß einer erfindungsgemäßen Getriebeschalthebelanordnung,
- Fig. 2 und 3: Draufsichten, die einen Ausschnitt der Getriebeschalthebelanordnung in unterschiedlichen Betriebszuständen darstellen,
- Fig. 4: eine Ansicht in Richtung der in Fig. 1 dargestellten Pfeile 4 - 4, wobei der besseren Übersichtlichkeit halber einige Teile weggelassen wurden,
- Fig. 5: eine Ansicht in Richtung der in Fig. 4 dargestellten Pfeile 5 - 5 und
- Fig. 6: eine vergrößerte Schnittansicht des Verriegelungsmechanismus der vorliegenden Erfindung.

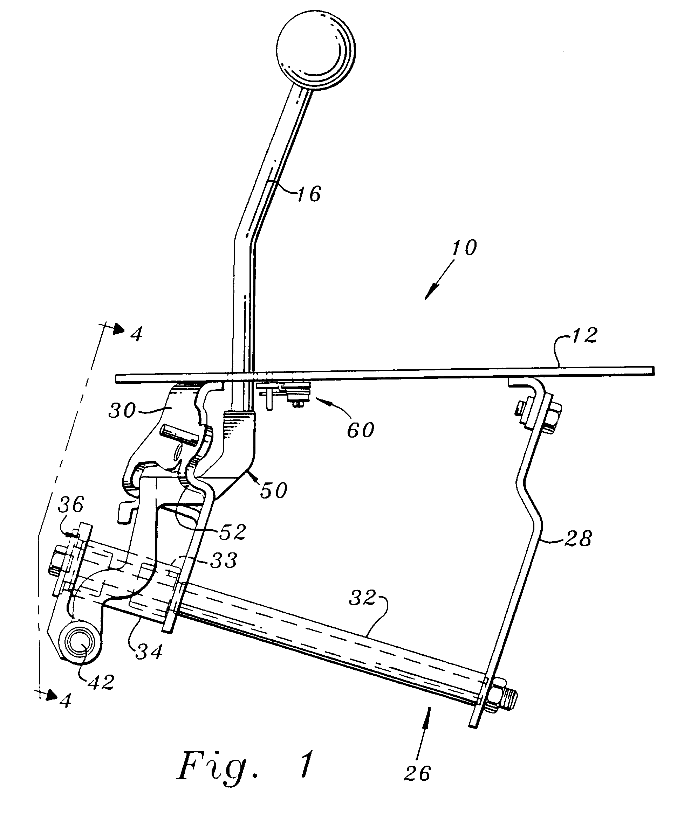

Gemäß der Fig. 1, 2 und 3 ist eine Konsole, die insgesamt mit 10 bezeichnet ist, in dem Fahrerstand eines nicht näher dargestellten landwirtschaftlichen Schleppers, der ein Lastschaltgetriebe enthält, angeordnet. Die Konsole 10 umfaßt ein Gehäuse mit einer Deckwandung 12 und nicht gezeigten Seitenwänden. In die Deckwandung 12 ist ein System von zusammenhängenden Schlitzen 14 eingelassen, durch die sich ein im wesentlichen senkrecht hierzu ausgerichteter Schalthebel 16 erstreckt.

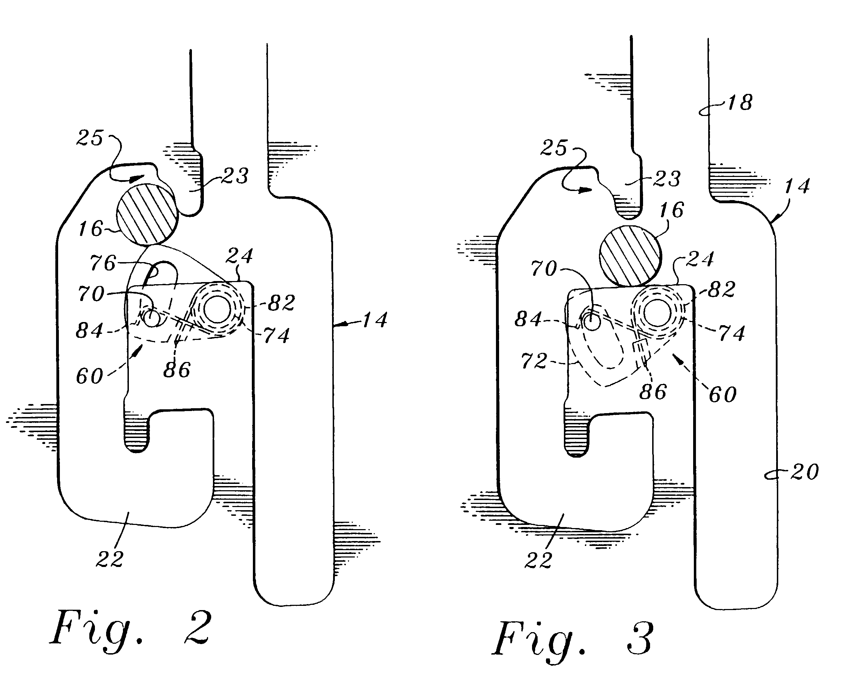

Die Schlitze 14 bilden einen in Fahrtrichtung längs ausgerichteten ersten oder Vorwärtsschlitz 18, einen in Fahrtrichtung ausgerichteten zweiten oder Rückwärtsschlitz 20, einen dritten oder Parkschlitz 22 und einen quer ausgerichteten Neutralschlitz 24. Die Deckwandung 12 enthält einen Vorsprung 23, der teilweise in den Neutralschlitz 24 hineinragt und auf einer Seite des Neutralschlitzes 24 eine Ausbuchtung oder Ausnehmung 25 bildet. Der Schalthebel 16 wird wahlweise in den Vorwärtsschlitz 18 bewegt, um einen Vorwärtsbetrieb des Fahrzeuges zu bewirken, wobei sich die Vorwärtsgeschwindigkeit mit einer Bewegung des Schalthebels 16 weiter nach oben (Fig. 2 oder 3) erhöht. Auf gleiche Weise läßt sich durch wahlweises Einstellen des Schalthebels 16 innerhalb des Schlitzes 20 ein Rückwärtsfahrbetrieb des Fahrzeuges einstellen, bei dem die Geschwindigkeit mit zunehmender Abwärtsbewegung (Fig. 2 oder 3) des Schalthebels 16 steigt. Ist der Schalthebel 16 im Bereich des Neutralschlitzes 24, so befindet sich das Fahrzeug in seinem neutralen Betriebszustand.

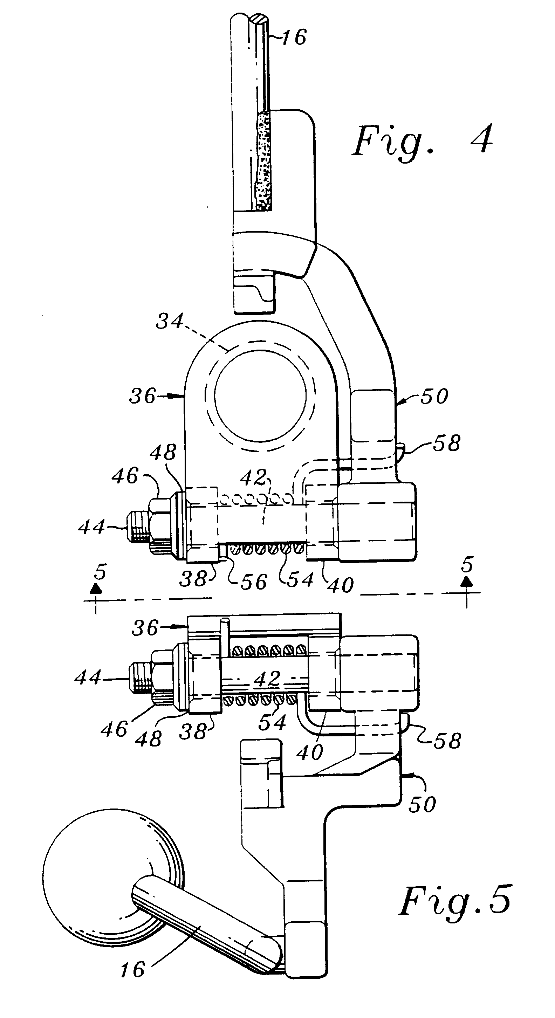

Der Schalthebel 16 steht über ein Steuergestängesystem 26 mit einem nicht gezeigten Lastschaltgetriebe in Verbindung. Dieses Steuergestänge 26 ist lediglich teilweise dargestellt, da die vorliegende Erfindung sich nur auf den Neutralverriegelungsmechanismus bezieht, der weiter unten beschrieben wird. Der Betrieb des nicht dargestellten Lastschaltgetriebes wird durch Positionierung des Schalthebels 16 gesteuert. Wie aus den Fig. 1, 4 und 5 ersichtlich, enthält das Steuergestänge 26 Tragkonsolen 28 und 30, die an der Deckwandung 12 durch geeignete Mittel, beispielsweise durch Verschweißen befestigt sind. Mit den Tragkonsolen 28, 30 sind die Stäbe 32 und 33 verschraubt. Eine Distanzhülse 34 ist drehbar auf dem Stab 33 gelagert. Eine Halterung 36 ist am Ende der Distanzhülse 34 befestigt. Wie am besten aus Fig. 5 ersichtlich, weist die Halterung 36 ein Paar von Schenkeln 38 und 40 auf. Die Schenkel 38, 40 nehmen einen verdrehbaren Bolzen 42 auf. Der Bolzen 42 besitzt ein Gewindeende 44 und wird in den Schenkein 38, 40 durch eine Mutter 46 und eine Unterlegscheibe 48 gehalten. Das andere Ende des Bolzens 42 ist an einem Ende eines Hebelteils 50 befestigt, dessen anderes Ende mit dem Schalthebel 16 verbunden ist. Wie am besten aus Fig. 1 hervorgeht, erstreckt sich das Hebelteil 50 durch eine Öffnung 52 in der Tragkonsole 30. Wie am besten aus Fig. 5 ersichtlich, ist auf dem Bolzen 42 eine Schraubenfeder 54 angeordnet. Die Schraubenfeder 54 hat einen ersten Schenkel 56, der mit der Halterung 36 in Eingriff steht und einen zweiten Schenkel 58, der mit dem Hebelteil 50 in Eingriff steht. Die Schraubenfeder 54 ist derart vorgespannt, daß sie den Schalthebel 16 gegen den Uhrzeigersinn (aus der Sicht der Fig. 1) bzw. nach links (aus der Sicht der Fig. 2 und 3) drückt.

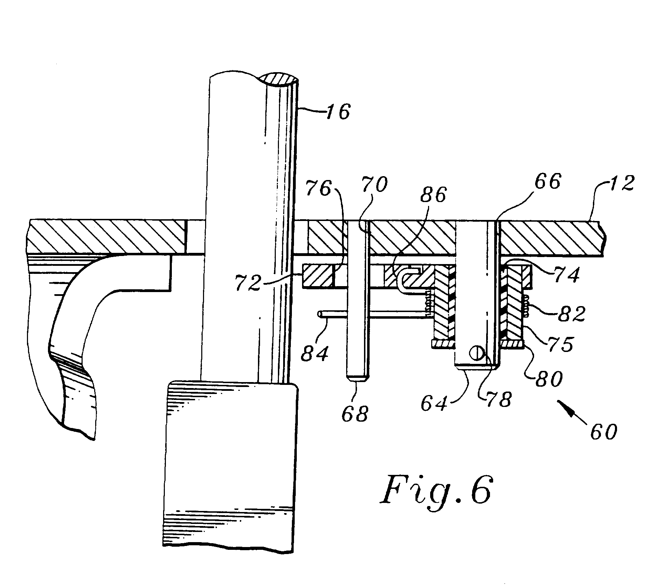

Gemäß der Fig. 1, 2, 3 und 6 ist auf der Unterseite der Deckwandung 12 in der Nähe des Neutralschlitzes 24 und im wesentlichen gegenüber der Ausnehmung 25 ein Verriegelungsmechanismus 60 befestigt. Ein Trägerstift 64 ist über eine Preßpassung in einer Bohrung 66 der Deckwandung 12 verankert. Ein Federverankerungsstab 68 (vorzugsweise ein handelsüblicher Federstift) ist über eine Preßpassung in einer Bohrung 70 der Deckwandung 12 verankert. Ein Verriegelungsteil 72 ist aus einer flachen, im wesentlichen dreieck- oder tränenförmigen Platte gebildet, durch deren eine Ecke sich eine Bohrung 74 erstreckt. Eine zylindrische Stahlbuchse 75, die einen Einsatz geringer Reibung aufnimmt, ist durch eine Preßpassung von der Bohrung 74 verankert. In das Verriegelungsteil 72 ist ein bogenförmiger Schlitz 76 eingelassen, der sich in der Nähe der Seite des Verriegelungsteils 72 befindet, die gegenüber der Bohrung 74 liegt. Die Enden des Schlitzes 76 können mit dem Federverankerungsstab 68 in Eingriff treten, so daß die Verdrehung des Verriegelungsteils 72 zu und weg von der Ausnehmung 25 sowie dem Vorsprung 23 begrenzt wird. Der Trägerstift 64 nimmt die Stahlbüchse 75 drehbar auf, so daß sich das Verriegelungsteil 72 frei um die Achse des Trägerstifts 64 verdrehen läßt. Das Verriegelungsteil 72 ist auf dem Trägerstift 64 durch einen Splint 78 und eine Unterlegscheibe 80 gesichert.

Eine Schraubenfeder 82 ist konzentrisch um die Stahlbuchse 75 angeordnet. Einer ihrer Schenkel 84 stützt sich am Federverankerungsstab 68 ab. Das andere Ende 86 wird von einer Aussparung in der Fläche des Verriegelungsteils 72 aufgenommen. Die Schraubenfeder 82 ist derart vorgespannt, daß sie das Verriegelungsteil 72 im Uhrzeigersinn um die Achse des Trägerstiftes 64 in die in Fig. 2 dargestellte Lage zu verdrehen versucht, in der der Federverankerungsstab 68 an ein Ende des Schlitzes 76 anstößt und eine weitere Verdrehung des Verriegelungsteils 72 verhindert.

Befindet sich der Schalthebel 16 (bezüglich Fig. 2) links neben dem Verriegelungteil 72 und wird dann nach rechts bewegt, so stößt er gegen das Verriegelungsteil 72 und wird von diesem in die in Fig. 2 dargestellte Lage gedrückt. In dieser Lage wird der Schalthebel 16 lösbar in der Ausnehmung 25 und gegen den Vorsprung 23 festgehalten. Stößt die Bedienungsperson in dieser Lage unbeabsichtigt derart gegen den Schalthebel 16, daß der Schalthebel 16 aus dem Neutralschlitz 24 nach rechts zu dem Vorwärtsschlitz 18 oder dem Rückwärtsschlitz 20 gedrückt wird, so wirken das Verriegelungsteil 72 und der Vorsprung 23 derart zusammen, daß eine unbeabsichtigte Bewegung des Schalthebels 16 vermieden wird. Um den Schalthebel 16 aus dem Neutralschlitz 24 in einen der Schlitze 18 oder 20 zu bewegen, muß der Schalthebel 16 zuerst gemäß Fig. 2 nach unten gedrückt werden. Dies veranlaßt das Verriegelungsteil 72, sich um den Trägerstift 64 und weg von der Ausnehmung 25 zu verdrehen. Hierdurch wird es möglich, den Schalthebel 16 über das Ende des Vorsprunges 23 hinaus nach rechts, in die in Fig. 3 dargestellte Lage zu bewegen. Aus dieser Lage läßt sich der Schalthebel 16 leicht in einen der Schlitze 18 oder 20 bewegen.

## Patentansprüche

1. Schalthebelanordnung mit einer Platte (12), die wenigstens einen Richtungsgangschlitz (18, 20) enthält, von dem ein Neutralschlitz (24) quer abzweigt, mit einem Schalthebel (16), dessen bewegbarer Schaft von den Schlitzen (18, 20, 24) aufgenommen und geführt wird, und mit einem Verriegelungsmechanismus (60), durch den sich der Schaft lösbar in dem Neutralschlitz (24) festhalten läßt, gekennzeichnet durch
- einen sich teilweise von einer Seite aus in den Neutralschlitz (24) erstreckenden Vorsprung (23),
- ein Verriegelungsteil (72), das beweglich an der Platte (12) in einem Bereich befestigt ist, der in der Nähe des Neutralschlitzes (24) und gegenüber dem Vorsprung (23) liegt, und
- eine vorgespannte Verriegelungsfeder (82), die das Verriegelungsteil (72) in Richtung Vorsprung (23) in eine Verriegelungslage drückt, in der das Verriegelungsteil (72) mit dem Schaft in Eingriff tritt und in der das Verriegelungsteil (72) sowie der Vorsprung (23) zusammenwirken, um eine unbeabsichtigte Bewegung des Schaftes im wesentlichen parallel zu dem Neutralschlitz (24) über den Vorsprung (23) hinaus in Richtung des Richtungsgangschlitzes (18, 20) zu vermeiden, wobei das Verriegelungsteil (72) derart angeordnet ist, daß durch eine Bewegung des Schaftes quer zur Ausrichtung des Neutralschlitzes (24) und weg von dem Vorsprung (23) der Schaft das Verriegelungsteil (72) gegen die Kraft der Verriegelungsfeder (82) von dem Vorsprung (23) weg, quer zum Neutralschlitz (24) bewegt und damit eine Bewegung des Schaftes im wesentlichen parallel zum Neutralschlitz (24) über den vorsprung (23) hinaus in den Richtungsgangschlitz (18, 20) erlaubt.

2. Schalthebelanordnung nach Anspruch 1, dadurch gekennzeichnet, daß an der Platte (12) in der Nähe des Neutralschlitzes (24) ein Drehzapfen (64) befestigt ist und daß das Verriegelungsteil (72) im wesentlichen dreieckförmig ausgebildet ist und in einer Ecke eine Bohrung (74) aufweist, die den Drehzapfen (64) aufnimmt, um den das Verriegelungsteil (72) verschwenkbar ist.

3. Schalthebelanordnung nach Anspruch 2, dadurch gekennzeichnet, daß das Verriegelungsteil (72) eine Buchse (75) trägt, die von seiner einen Ecke hervorsteht und den Drehzapfen (64) verschwenkbar aufnimmt.

4. Schalthebelanordnung nach Anspruch 2 oder 3, dadurch gekennzeichnet, daß die Verriegelungsfeder eine über den Drehzapfen (64) oder die Buchse (75) gestülpte Schraubenfeder (82) ist, deren einer Schenkel (86) an dem Verriegelungsteil (72) angreift.

5. Schalthebelanordnung nach einem der Ansprüche 1 bis 4, dadurch gekennzeichnet, daß ein Anschlag an dem Verriegelungsteil (72) angreift, der die Schwenkbewegung des Verriegelungsteils (72) in Richtung des Vorsprungs (23) begrenzt und das Verriegelungsteil (72) mit einer seiner Ecken zwischen den Seiten des Neutralschlitzes (24) hält.

6. Schalthebelanordnung nach einem der Ansprüche 1 bis 5, dadurch gekennzeichnet, daß an der Platte (12) ein Anschlagstift (68) befestigt ist, und daß das Verriegelungsteil (72) einen Begrenzungsschlitz (76) enthält, der den Anschlagstift (68) aufnimmt, und so ausgebildet ist, daß seine Enden beim Verschwenken des Verriegelungsteils (72) mit dem Anschlagstift (68) in Eingriff treten und den Schwenkbereich des Verriegelungsteils (72) begrenzen.

7. Schalthebelanordnung nach Anspruch 6, dadurch gekennzeichnet, daß der Anschlagstift (68) in der Nähe des Neutralschlitzes (24) und beabstandet zu dem Drehzapfen (64) an der Platte (12) befestigt ist.

8. Schalthebelanordnung nach Anspruch 6 oder 7, dadurch gekennzeichnet, daß die Verriegelungsfeder (82) mit einem ersten Schenkel (84) an dem Anschlagstift (68) und/oder mit einem zweiten Schenkel (86) an dem Verriegelungsteil (72) angreift.

9. Schalthebelanordnung nach einem der Ansprüche 1 bis 8, dadurch gekennzeichnet, daß eine Schalthebelfeder (54) vorgesehen ist, die den Schaft von dem Richtungsgangschlitz (18, 20) weg in den Neutralschlitz (24) drückt.

## Claims

1. A gear lever arrangement with a plate (12), which has at least one directional gear slot (18, 20), from which a neutral slot (24) branches off transversely, with a gear lever (16) whose movable shaft is received and guided by the slots (18, 20, 24), and with a locking mechanism (60) by means of which the shaft can be held releasably in the neutral slot (24), characterized by
- a projection (23) extending part way from one side into the neutral slot (24),
- a latch part (72) which attached movably to the plate (12) in a region lying in the vicinity of the neutral slot (24) and opposite the projection (23),
- and a biased latch spring (82) which urges the latch part (72) in the direction of the projection (23) into a locking position in which the latch part (72) engages the shaft and in which the latch part (72) and the projection (23) cooperate in order to avoid inadvertent movement of the shaft substantially parallel to the neutral slot (24) over the projection (23) in the direction of the directional gear slot (18, 20), wherein the latch part (72) is so arranged that, when the shaft is moved transverse to the direction of the neutral slot (24) and away from the projection (23), the shaft moves the latch part (72) against the force of the latch spring (82) transverse to the neutral slot (24), away from the projection (23) and thereby permits movement of the shaft substantially parallel to the neutral slot (24), over the projection (23) and into the directional gear slot (18, 20).

2. A gear lever arrangement according to claim 1, characterized in that a pivot pin (64) is fixed on the plate (12) in the vicinity of the neutral slot (24) and in that the latch part (72) is of substantially triangular shape and has a bore (74) in one corner which receives the pivot pin (64), so that the latch part (72) can pivot.

3. A gear lever arrangement according to claim 2, characterized in that the latch part (72) carries a bush (75) projecting from its one corner and receiving the pivot pin (64) pivotally.

4. A gear lever arrangement according to claim 2 or 3, characterized in that the latch spring is a helical spring (82) fitted over the pivot pin (64) or the bush (75), with one arm (86) engaging on the latch part (72).

5. A gear lever arrangement according to any of claims 1 to 4, characterized in that a stop engages the latch part (72) and limits the pivotal movement of the latch part (72) in the direction of the projection (23) and arrests the latch part (72) with one of its corners between the sides of the neutral slot (24).

6. A gear lever arrangement according to any of claims 1 to 5, characterized in that a stop pin (68) is fixed on the plate (12) and in that the latch part (72) has a limiting slot (76), which receives the stop pin (68) and is so shaped that its ends come into engagement with the stop pin (68) when the latch part (72) pivots and delimit the pivotal range of the latch part (72).

7. A gear lever arrangement according to claim 6, characterized in that the stop pin (68) is fixed on the plate (12) in the vicinity of the neutral slot (24), spaced from the pivot pin (64).

8. A gear lever arrangement according to claim 6 or 7, characterized in that a first arm (84) of the latch spring (82) engages on the stop pin (68) andlor a second arm (86) engages on the latch part (72).

9. A gear lever arrangement according to any of claims 1 to 8, characterized in that a gear lever spring (54) is provided and urges the shaft away from the directional gear slot (18, 20) into the neutral slot (24).

## Revendications

1. Dispositif de levier de changement de vitesse comportant une plaque (12), qui contient au moins une fente (18,20) pour le déplacement dans une direction, à partir de laquelle s'étend transversalement, en dérivation, une fente (24) pour le neutre, et comportant un levier de changement de vitesse (16), dont la tige mobile est reçue et guidée dans les fentes (18,20,24), et comportant un mécanisme de verrouillage (60), grâce auquel la tige peut être retenue bloquée, de façon amovible, dans la fente (24) pour le neutre, caractérisé par
- un appendice saillant (23) qui s'étend partiellement, à partir d'un côté, dans la fente (24) pour le neutre,
- une partie de verrouillage (72), qui est fixée de manière à être mobile sur la plaque (12) dans une zone, qui est située à proximité de la fente (24) pour le neutre et en vis-à-vis de l'appendice saillant (23),
- un ressort précontrainte de verrouillage (82), qui repousse la partie de verrouillage (72) en direction de l'appendice saillant (23), dans une position verrouillée, dans laquelle la partie de verrouillage (72) engrène avec la tige et dans laquelle la partie de verrouillage (72) et l'appendice saillant (23) coopèrent pour éviter un déplacement intempestif de la tige essentiellement parallèlement à la fente (24) pour le neutre, au-delà de l'appendice saillant (23) dans la direction de la fente (18,20) pour le déplacement dans une direction, la partie de verrouillage (72) étant disposée de telle sorte que, sous l'effet d'un déplacement de la tige transversalement par rapport à l'orientation de la fente (24) pour le neutre et à partir de l'appendice saillant (23) pour la tige, la partie de verrouillage (72) s'écarte de la partie saillante (23), transversalement par rapport à la fente (24) pour le neutre, à l'encontre de la force du ressort de verrouillage (82) et permet par conséquent un déplacement de la tige essentiellement parallèlement à la fente (24) pour le neutre, au-delà de l'appendice saillant (23), dans la fente (18,20) pour le déplacement dans une direction.

2. Dispositif de levier de changement de vitesse selon la revendication 1, caractérisé en ce qu'un pivot (64) est fixé à la plaque (12) à proximité de la fente (24) pour le neutre et que la partie de verrouillage (75) est réalisée essentiellement avec une forme triangulaire et possède dans un angle, un perçage (74), qui loge le pivot (64) autour duquel la partie de verrouillage (72) peut pivoter.

3. Dispositif de levier de changement de vitesse selon la revendication 2, caractérisé en ce que la partie de verrouillage (72) porte une douille (75), qui fait saillie à partir de l'un de ses angles et loge le pivot (64), de manière qu'il puisse pivoter.

4. Dispositif de levier de changement de vitesse selon la revendication 2 ou 3, caractérisé en ce que le ressort de verrouillage est un ressort hélicoïdal (82) emmanché par-dessus le pivot (64) ou la douille (75) et dont une branche (86) attaque la partie de verrouillage (72).

5. Dispositif de levier de changement de vitesse selon l'une des revendications 1 à 4, caractérisé en ce qu'une butée attaque la partie de verrouillage (72), qui limite le mouvement de pivotement de cette partie de verrouillage (72) en direction de l'appendice saillant (23) et retient la partie de verrouillage (72), par l'un de ses angles, entre les côtés de la fente (24) pour le neutre.

6. Dispositif de levier de changement de vitesse selon l'une des revendications 1 à 5, caractérisé en ce qu'à la plaque (12) est fixée une tige de butée (68) et que la partie de verrouillage (72) contient une fente de limitation (76), qui reçoit la tige de butée (68), et est agencée de telle sorte que, lors basculement de la partie de verrouillage (72), les extrémités de cette dernière viennent buter contre la tige de butée (68) et limitent la plage de pivotement de la partie de verrouillage (72).

7. Dispositif de levier de changement de vitesse selon la revendication 6, caractérisé en ce que la tige de butée (68) est fixée à proximité de la fente (24) pour le neutre et à distance du pivot (64) situé sur la plaque (12).

8. Dispositif de levier de changement de vitesse selon la revendication 6 ou 7, caractérisé en ce que le ressort de verrouillage (82) attaque par sa première branche (84) la tige de butée (68) et/ou par une seconde branche (86) la partie de verrouillage (72).

9. Dispositif de levier de changement de vitesse selon l'une des revendications 1 à 8, caractérisé par le fait qu'il est prévu un ressort (54) du levier de changement de vitesse, qui repousse la tige dans la fente (24) pour le neutre, en l'écartant de la fente (18,20) pour le déplacement dans une direction.
